# EUROPEAN PATENT SPECIFICATION

(11) **EP 1 579 462 B1**
(45) Date of publication and mention of the grant of the patent: **03.05.2006**
(21) Application number: 03812173.7
(22) Date of filing: 02.12.2003
(51) Int. Cl.: H01B 1/20, H01M 8/02

(54) **CONDUCTING CARBON COMPOSITIONS AND ARTICLES MADE THEREFROM**
LEITENDE KOHLENSTOFFZUSAMMENSETZUNGEN UND DARAUS HERGESTELLTE ARTIKEL
COMPOSITIONS AU CARBONE CONDUCTRICES ET ARTICLES FABRIQUES A PARTIR DE CES COMPOSITIONS

(30) Priority: 02.12.2002 US 430193 P
(43) Date of publication of application: 28.09.2005
(73) Proprietor: IRD FUEL CELLS A/S, 5700 Svendborg (DK)
(72) Inventor: THOMAS, David, Morgan, DK-5771 Stenstrup (DK)
(74) Representative: Peebles, Katrina
(86) International application number: PCT/EP2003/013674
(87) International publication number: WO 2004/051673

(56) References cited:
- EP-A- 1 120 843
- WO-A-02/090291
- FR-A- 2 578 350

## Description

### Field of the invention

The present invention relates to polymer-bonded metallized carbon composites with enhanced electrical and thermal conductivity. Such carbon based composites of the present invention are widely applied in areas including but not limited to, low friction devices such as bearings, anti-friction devices, separators for fuel cells, composite electrodes for arc smelting furnace, arc initiation in cathodic arc plasma sources, porous electrodes, electrode materials for electrolysis, and conducting brushes for use in electrical devices such as contacting commutators and slip-rings.

### Background of the invention

Conventional conductive carbon composites are rigid, frangible carbon articles manufactured by impregnation of carbon particles with a binder, such as graphitizing pitch, to yield a composite capable of becoming plastic at temperatures above the softening point of the binder. After shaping by molding or extrusion, the pitch of articles comprising such composites is carbonized by heating and maintaining the article at temperatures up to approximately 800°C for extended periods of time ranging from approximately 3 days to 3 weeks depending upon the size of the article. Heating for this extended period of time is also required to remove volatiles, hydrogen and sulfur. The carbonized articles are then re-impregnated with a graphitizing pitch in order to fill accessible voids and pores, thereby reducing porosity and optimizing strength, and electrical conductivity. This step is followed by repeated carbonization, followed by re-impregnation up to three times.

Articles comprising the densified re-impregnated carbon composites are then heated in an electric resistance furnace to approximately 3000°C. This high temperature restructures the carbon into graphite. The articles then require further machining to the dimensions and form required, since the carbonization and graphitizing steps result in considerable shrinkage and deformation from the initial shape.

Where electrically conductive and impermeable products are desired this route is excessively costly and time consuming.

Accordingly, attempts have been made to economize manufacture of conducting carbon-based articles by molding to the final shape.

For example, Aylsworth (U.S. Patent 1,137,373) discloses articles manufactured by molding a mixture of expanded carbon and phenolic resin.

Shane et al. (U.S. Patent 3,404,061) teaches a process for making flexible articles of expanded graphite by making expanded graphite particles and subsequently shaping articles from a mixture of these particles and phenolic resin.

Yoshida (U.S. Patent 6,468,685) teaches a separator for a fuel cell having a molded resin-bonded carbon separator. The separator is made of a composite of graphite powder and a selected thermosetting resin, preferably phenolic resin.

However, the conductivity parameter of such heterogeneous materials depends on the bond fraction, while the conductivity depends on the amount of conducting carbon filler provided. It is thus well known that when the non-conductive bond fraction is raised above the percolation limit wherein all available pores are filled by the bond material, the conductivity falls rapidly as particle-to-particle contact becomes less probable. On the other hand the mechanical properties are increasingly deteriorated as the bond fraction is decreased. Thus, in practice it is very difficult to establish reasonable rheological properties in order to shape the article in a flow-determined compaction process such as molding, mill calendaring or extrusion.

Attempts have been made to rectify this deficiency by modifying compaction methods. However, capital costs increase rapidly as compaction equipment becomes heavier.

Thomas (U.S. Patent 5,888,645) discloses an electrical contacting commutator brush for use in electrical motors, having a length of 25mm and a square cross-sectional area of 1 cm² which was manufactured from a compound material composed by volume by using ultrasonic energy to aid compaction. The material was filled into a mould die with a sectional length of 25 mm and a sectional height of 10 mm so that the final dimensions were 25 x 10 x 10 mm. The plunger was dropped and the specific pressure applied was 100 bars. Ultrasonic energy was applied for 2.3 seconds and the pressure was maintained for a further 3 seconds before the brush was ejected from the mould. The finished item had an electrical resistivity of 0.128 Ohm cm.

However this method is restricted to relatively small articles, so it is necessary to use alternative methods to obtain conductive carbon articles with superior mechanical properties requiring bond fractions above the percolation limit where inter-particle contact cannot be dependably assured.

Although attempts have been made to manufacture conducting materials using electronically polymers such as a polyacetylene and the like, these materials are chemically unstable in the working environment or rheologically unsuitable.

### Summary of the Invention

An object of the present invention is to provide electrically conducting carbon composites and methods for production of electrical carbon composites for use in a wide variety of electric machines and devices.

### Brief Description of the Drawings

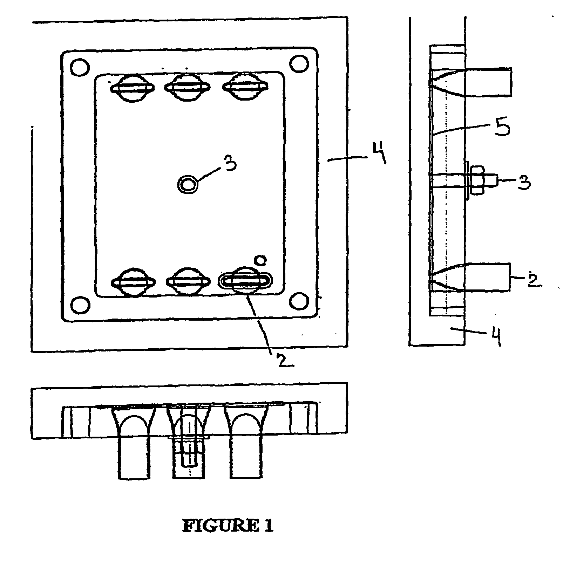

Figure 1 provides a diagram of an exemplary fuel cell separator comprising an electrical carbon composite of the present invention.

### Detailed Description of the Invention

The intrinsic conductivity of a mixture of two disparate materials has been studied by Maxwell (J.C. Maxwell, A Treatise on Electricity and Magnetism (Dover, N.Y., 1954) and others (D.J. Jeffrey, Proc. Roy. Soc. Lond. A 335, 355 (1973); H.B. Levine and D.A. McQuarrie, J. Chem. Phys. 49, 4181 (1968). The results confirm the practical experience that at bond levels of 20% or more critical fall off in the coverall conductivity occurs (Kingery, Bowen & Uhlmann " Introduction to Ceramics" Second Edition pp 636-637. Wiley Interscience). It has also been shown that attempts to improve conductivity by changing the morphology of the additives helps only marginally so that while the addition of conducting carbon fibers can assist in transferring electric current, the amounts of fiber needed to distribute the current at equal density alters the rheology in the shaping process. Alterations in rheology lead to serious loss of electrical properties as the degradation continues with loss of satisfactory conductivity as a consequence. Impervious materials thus require high bond levels in order to fill the pores between the functional materials of the filler. This means that optimization of electrical conductivity requires optimization of the volume fraction of the bond and functional conductive carbon materials. While it is an advantage to use an electronically conducting material as a binder these are not practically feasible in the environment. In the shaping process plastic flow of material to fill molds or to reduce void volume is essential.

The present invention provides a means and a process to manufacture conducting carbon materials with improved electrical properties while retaining rheological advantages. With the present invention, it is now possible to produce carbon materials economically with low porosity and good conductivity using readily available commercial materials that can be bought at commodity prices. In the present invention, conductivity is improved in the carbon composite by providing electronically conducting paths from one embedded particle to another in the binder continuum.

Carbon composites provide a chemical environment that is conducive to reduction. By incorporation of a reducible organo-metallic complex which is easily dispersible or soluble in the binder continuum surrounding the carbon filler particles, it has now been found that it is possible to metallize all free surfaces so that small quantities of free metal which are capable of enhancing the conductivity are present. At the same time, the exterior surface of the article can be metallized thus obviating the necessity of enhancing surface contact.

The present invention also facilitates the incorporation of metallic substances into carbon composites by providing a means of enhancing particle-to-particle contact in metallo-carbon materials where a predominantly metallic discontinuous phase is bonded by a quantity of organic binder such as bitumen, pitch or organic polymers such as phenol-formaldehyde resins. An organo-metallic complex of any metal that can reasonably be reduced to carbon monoxide is useful for this process. These are referred to herein as "reducible organo-metallic complexes." Preferred reducible organo-metallic complexes that can be used include those comprising zinc, nickel, copper, silver, molybdenum and other noble metals which are easy to reduce. Organo-metallic complexes comprising the carboxylic salts of lead and antimony can also be used.

In a preferred embodiment, the organo-metallic complex comprises highly diffusible molybdenum which can be deposited to enhance compatibility with the additives with which it forms alloys. Examples include molybdenum isopropoxide and molybdenum hexacarbonyl which are commercially available from Alfa Chemicals Ltd. (Gattefossé UK Arc House, Terrace Road South, Binfield, Bracknell. Berkshire RG42 4PZ. U.K). Sulfur-containing oil additives which also provide a suitable source of metallic molybdenum include dithiophosphates and dithiocarbamates of molybdenum. These materials are commercially available from R.T. Vanderbilt Company, Inc. (30 Winfield Street. Norwalk, CT 06856).

Low diffusivity provided by nickel is preferred in some battery electrode applications. Nickel materials for use in these applications are available from Shepherd Chemical Co. (Middletown OH, USA).

Catalyst materials can also be prepared from platinum and/or palladium series organo-metal compounds such as palladium acetylacetonate (Merck 807103) and bis(dibenzylideneacetone) palladium (Merck 119228).

In view of the nature of many of the binders used in carbon composites hitherto, it is important to select organo-metal compounds that are compatible with or soluble in the binder.

Composites of the present invention were prepared with the readily available compounds of cyclohexanecarboxylic (naphthenic) acid (CAS 98-89-5) or metal naphthenates. These compounds can be synthesized from a metal such as copper, iron, molybdenum or cobalt and naphthenic acid by refluxing in toluene with removal of water. Molybdenum naphenate for use in the present invention was prepared from molybdic trioxide. The procedure used involves making a mixture of the binder and carbon ingredients and adding sufficient metallo-organic compound to form at least a monolayer of metal on all free surfaces in the article to manufacture. This involves assessing the amount of free surface based on open and closed porosity and the exposed surface. In general, approximately 1% of a naphthenate compound to the binder component is used. However, experiments showed that as much as 10% of the binder weight can be added and that no obvious disadvantages were observed by introducing as little as 0.1% by weight to a phenolic resin binder which fills 30% by volume of an electrode graphite granulate composite.

The subsequent step is the shaping and compaction of the article which ideally is a process which involves substantial lateral movement of material in order to obtain sufficiently low porosity in the shaped object. Suitable means of shaping by forming are known to those versed in the art and include extrusion, calendaring or axial or iso-static or ultrasonic molding optionally and preferably in an evacuated mold. It is conventional that cross-linking of polymeric binders occurs in this step in order to lead to a stable infusible shaped green product. Cross-linking is typically performed at temperatures of approximately 140°C to 200°C at specific surface pressures of approximately 1000 to 5000 Mpa depending on the size and shape of the object and the flow property of the heated composite mixture.

For bitumen or pitch-bonded carbon or graphite articles the carbonization curing process is that described in the Background of the Invention.

Post curing of phenolic bonded or other resin-bonded composites follows conventional practice up to a temperature of 350°C. This involves a sequential rise in temperature in a curing oven at a rate of approximately 5°C from 200 to 350°C.

The route for pitch-bonded and resin products is hereafter the same. In an oven fitted with equipment for maintaining a reducing gas atmosphere the temperature is raised sequentially for the carbon article to be subjected to continued cure and pyrolysis in a reducing atmosphere. The duration of this step depends on the article mass but may be as short as 30 minutes. The temperature is raised to at least 600°C. The reducing gas can be endo-gas based or burnt natural gas or alternatively an atmosphere of dried cracked ammonia with a composition of 10% H₂ and 90% N₂.

In this reduction step a thin layer of conducting metallic material is deposited on all surfaces. It has been found that this treatment enhances the electrical conductivity of the carbon material.

Experiments have also shown that a coating of metallo-organic compound containing carbon based conducting paste made of graphite and conducting carbon can enhance the contact through the surface skin providing significant advantages in overall conductivity.

The conductive composites of the present invention are useful in a variety applications including, but not limited to, low friction devices such as bearings, anti-friction devices, separators for fuel cells, composite electrodes for arc smelting furnace, arc initiation in cathodic arc plasma sources, porous electrodes, electrode materials for electrolysis, and conducting brushes for use in electrical devices such as contacting commutators and slip-rings.

The following nonlimiting examples are provided to further illustrate the present invention.

### Examples

### Example 1:

A conducting paste comprising 1 part molybdenum naphenate, 21 parts of phenol formaldehyde resin J10IIH, 20 parts of Lonza KS200 graphite power and 9 parts of Ketjen Black in 100 parts of toluene was prepared. The paste was applied by means of a brush as a 50 micron thick dried layer on a fuel cell separator plate and cured at 200°C for 30 minutes. In an oven fitted with an endo-gas atmosphere at 950°C the sheet was post cured for a period of 10 minutes. The contact resistance was reduced compared to the uncoated separator by a factor of 2.

### Example 2:

A separator plate was shaped from a mixture of 10 parts by weight of phenol-formaldehyde novolak resin powder, 1.0 part of molybdenum napthenate, 9 parts Ketjen Black EC, 60 parts of Lonza graphite powder KS 200 and 20 parts of granulated electrode graphite passing an ASTM 18 mesh sieve. The separator plate was compacted in an evacuated mold at 160°C for 15 minutes to produce a carbon sheet. This sheet was carbonized in a curing oven for 18 hours at a starting temperature of 160°C rising at 5° per hour to 350°C in an endo gas atmosphere.

The article was post pyrolyzed in an oven by raising the temperature sequentially to 950°C in the course of 35 minutes and holding this temperature for 10 minutes with subsequent cooling in a reducing atmosphere to under 150°C. The conductivity of this article was 80µS.

### Example 3:

A reinforced endplate with an embedded copper current collector for use in fuel cell application having an inner surface comprising the final terminating gas distribution/separator surface in the fuel cell stack was prepared. See Figure 1. The construction comprised a grooved gas distributor contacting surface, a membrane electrode assembly (1) and a copper manifold and current collector (5) to be embedded in the composite mass. This current collector was fitted with manifold gas entry pipes (2) and a connector (3) to lead current from the fuel cell stack. Webs are made when molding in order to reinforce the structure to give increased stiffness to the bending moment created by internal pressure in the stack. The material (4) used for the structural element of the current collector assembly was made of a mixture of phenolic resin and cut 3 mm acrylic carbon fiber of the SFC type available from SGL GmbH (Meitingen, Federal Republic of Germany) and comprised 20 parts phenol formaldehyde resin Fers F335 (FERS, Spain), 30 parts of natural graphite flakes (ASTM 325 Meshl 44 micron, 99.18%C; Asbury Co., U.S.A.; 5% SFC 3mm carbon fiber (SGL GmbH) 10 parts Kevar pulp (DuPont, Wilmington, Delaware), 35 parts 18 mesh granulated electrode graphite and 10 parts Ketjen Black EC (Akzo, Netherlands, Europe).

The conductive surface (1) consisted of a material comprising 10 parts by weight phenol-formaldehyde novolak resin powder, 1.0 part molybdenum napthenate, 9 parts Ketjen Black EC, 60 parts Lonza graphite powder KS 200 and 20 parts granulated electrode graphite passing an ASTM 18 mesh sieve.

The material was assembled in a compression heated mold fitted for evacuation. The mold was heated at 160-248°C for 20 minutes at a surface specific pressure of 2500 MPa. Current collector was removed from the mold and post-cured for 16 hours at a temperature rising at 5°C per hour from 160°C to 240°C.

Carbonization was carried out in dried burnt cracked ammonia in an oven starting at 200°C and was concluded at 950° in the course of 8 hours. The resulting integral current collector assembly had a conductivity of 100 µS/cm.

## Claims

1. An electrically conducting carbon composite comprising a reducible organo-metallic complex dispersed or dissolved in a binder.

2. The electrically conducting carbon composite of claim 1 wherein the reducible organo-metallic complex comprises zinc, nickel, copper, silver, molybdenum, platinum or palladium.

3. The electrically conducting carbon composite of claim 1 wherein the reducible organo-metallic complex comprises molybdenum.

4. A method for producing an electrically conducting carbon composite comprising dispersing or dissolving a reducible organo-metallic complex in a binder and metallizing exterior surfaces of the binder.

5. The method of claim 4 wherein the reducible organo-metallic complex comprises zinc, nickel, copper, silver, molybdenum, platinum or palladium.

6. The method of claim 4 wherein the reducible organo-metallic complex comprises molybdenum.

7. A fuel cell separator comprising the carbon composite of claim 1.

## Patentansprüche

1. Elektrisch leitfähiger Kohlenstoff-Verbundwerkstoff, umfassend einen reduzierbaren organo-metallischen Komplex, welcher in einem Bindemittel dispergiert oder aufgelöst ist.

2. Elektrisch leitfähiger Kohlenstoff-Verbundwerkstoff gemäß Anspruch 1, wobei der reduzierbare organo-metallische Komplex Zink, Nickel, Kupfer, Silber, Molybdän, Platin oder Palladium umfasst.

3. Elektrisch leitfähiger Kohlenstoff-Verbundwerkstoff gemäß Anspruch 1, wobei der reduzierbare organo-metallische Komplex Molybdän umfasst.

4. Verfahren zum Herstellen eines elektrisch leitfähigen Kohlenstoff-Verbundwerkstoffs, umfassend Dispergieren oder Auflösen eines reduzierbaren organo-metallischen Komplexes in einem Bindemittel und Metallisieren äußerer Oberflächen des Bindemittels.

5. Verfahren gemäß Anspruch 4, wobei der reduzierbare organo-metallische Komplex Zink, Nickel, Kupfer, Silber, Molybdän, Platin oder Palladium umfasst.

6. Verfahren gemäß Anspruch 4, wobei der reduzierbare organo-metallische Komplex Molybdän umfasst.

7. Brennstoffzellen-Separator, umfassend den Kohlenstoff-Verbundwerkstoff gemäß Anspruch 1.

## Revendications

1. Composition au carbone électriquement conductrice comportant un complexe organométallique réductible dispersé ou dissous dans un liant.

2. Composition au carbone électriquement conductrice selon la revendication 1, dans lequel le complexe organométallique réductible comprend du zinc, du nickel, du cuivre, de l'argent, du molybdène, du platine ou du palladium.

3. Composition au carbone électriquement conductrice selon la revendication 1, dans lequel le complexe organométallique réductible comprend du molybdène.

4. Procédé pour produire une composition au carbone électriquement conductrice comprenant la dispersion ou la dissolution d'un complexe organométallique réductible dans une liant et la métallisation des surfaces extérieures du liant.

5. Procédé selon la revendication 4, dans lequel le complexe organométallique réductible comprend du zinc, du nickel, du cuivre, de l'argent, du molybdène, du platine ou du palladium.

6. Procédé selon la revendication 4, dans lequel le complexe organométallique réductible comprend du molybdène.

7. Séparateur de piles à combustible comprenant la composition au carbone selon la revendication 1.
